# EUROPEAN PATENT APPLICATION

(11) **EP 2 442 160 A1**
(43) Date of publication of application: **18.04.2012**
(21) Application number: 10786213.8
(22) Date of filing: 10.06.2010
(51) Int. Cl.: G02B 5/26, G02B 5/30

(54) **PROCESS FOR PRODUCTION OF LIGHT REFLECTION FILM**

(30) Priority: 11.06.2009 JP 2009140160
(71) Applicant: FUJIFILM Corporation, Tokyo 106-0031 (JP)
(72) Inventor: OKI Kazuhiro, Minami-ashigara-shi Kanagawa 250-0193 (JP); ICHIHASHI Mitsuyoshi, Minami-ashigara-shi Kanagawa 250-0193 (JP)
(74) Representative: HOFFMANN EITLE
(86) International application number: PCT/JP2010/059829
(87) International publication number: WO 2010/143682

(57) **Abstract**

To provide a process capable of stably producing a light reflective film with plural light reflective layers formed of a fixed cholesteric liquid crystal phase, having high transparency and excellent light-reflective characteristics.

Disclosed is a process of preparing a light reflective film having at least two light reflective layers formed of a fixed cholesteric liquid crystal phase comprising a first step of allowing a curable liquid crystal composition to form a cholesteric liquid crystal phase on a first light reflective layer formed of a fixed cholesteric liquid crystal phase, and a second step of carrying out a curing reaction of the curable liquid crystal composition under an irradiation of an ultraviolet light to fix the cholesteric liquid-crystal phase, thereby to form a second light reflective layer, wherein in the second step, the ultraviolet light is irradiated to the curable liquid crystal composition through a member capable of lowering at least the intensity of the ultraviolet light with a wavelength of 340nm or shorter.

## Description

### TECHNICAL FIELD

The present invention relates to a process of preparing a light reflective film having a laminate of light reflective layers formed of a fixed liquid crystal phase to be mainly used as an infrared-light reflective film for heat-shielding windowpanes of buildings, vehicles or the like.

### BACKGROUND ART

With the recent increase in interest in environment and energy-related issues, the needs for energy-saving industrial products are increasing; and as one of them, glass and film are desired that are effective for heat shield for windowpanes for houses, automobiles, etc., or that is, effective for reducing heat load due to sunlight. For reducing heat load due to sunlight, it is necessary to prevent transmission of sunlight rays falling within any of the visible range or the infrared range of the sunlight spectrum.

Laminated glass coated with a special metallic film capable of blocking out thermal radiations, which is referred to as Low-E pair glass, is often used as eco-glass having high heat-insulating/heat-shielding capability. The special metallic film may be formed by lamination of plural layers, for example, according to a vacuum-deposition method disclosed in Patent Reference 1. The special metallic film formed through vacuum deposition is extremely excellent in reflectivity, but the vacuum process is nonproductive and its production cost is high. In addition, when the metallic film is used, it also blocks electromagnetic waves; and therefore in use in mobile telephones and the like, the metallic film may causes radio disturbance; or when used in automobiles, there may occur a problem in that ETC (electronic toll collection) could not be used.
Patent Reference 2 proposes a heat-reflecting transparent substrate having a metallic fine particles-containing layer. The metallic fine parficles-containing film is excellent in visible light transmittance but has a low reflectivity to light falling within a wavelength range of from 700 to 1200 nm that significantly participates in heat shielding, and therefore has a problem in that its heat-shielding capability could not be enhanced.
And Patent Reference 3 discloses a heat-shielding sheet that has an infrared-absorbing dye-containing layer. Use of an infrared-absorbing dye may lower sunlight transmittance but is problematic in that the film surface temperature rises through sunlight absorption and the heat-shielding capability of the film lowers through re-release of the heat.

And Patent Reference 4 discloses a laminated optical film having a retardation film with predetermined characteristics and a reflective circularly-polarizing plate and having infrared reflectivity, and this discloses an example of using a cholesteric liquid-crystal phase as the retardation film.
And Patent Reference 5 discloses an infrared-light reflecting article comprising a visible light transparent substrate and an infrared-light reflecting cholesteric liquid-crystal layer disposed on the substrate.
And Patent Reference 6 discloses a polarizing element having plural cholesteric liquid-crystal layers; however, the laminate formed through lamination of cholesteric liquid-crystal layers is used mainly for efficiently reflecting visible-range light.

There has been provided the process described below as a process of preparing the lamination with plural cholesteric liquid crystal layers. At first, a cholesteric liquid crystal material is applied to a surface of a substrate, heated and dried to form a cholesteric liquid crystal phase, and subjected to an irradiation of the UV light so that the curing reaction thereof is carried out and the alignment state is fixed. In this way, a layer is formed. After that, the steps are repeated and a lamination with plural layers is obtained.
Patent Reference 7 proposes adjusting the illuminance of the UV light in the process of preparing a cholesteric liquid crystal layer by irradiating polymerizable liquid crystal with the UV light.

### PATENT REFERENCES

[Patent Reference 1] JP-A-6-263486
[Patent Reference 2] JP-A-2002-131531
[Patent Reference 3] JP-A-C-194517
[Patent Reference 4] Japanese Patent 4109914
[Patent Reference 5] JP-T 2009-514022
[Patent Reference 6] Japanese Patent 3500127
[Patent Reference 7] Japanese Patent 4008358

### SUMMARY OF INVENTION

### PROBLEMS TO BE RESOLVED BY THE INVENTION

According to the above-described producing process, the layer formed initially is repeatedly subjected to an irradiation of the UV light since the curing reaction is carried out under an irradiation of the UV light while each layer is formed. The present inventors have assiduously studied and, as a result, have found that the material (mainly the liquid crystal material) contained in the layer was degraded by the repetitive irradiation of the UV light and the transparency of the layer as a whole was lowered. As described above, Patent Reference 7 discloses the method of preparing the wide-band cholesteric liquid crystal film by adjusting the illuminance of the UV light to the certain range. However, when the laminate with plural layers formed of a fixed liquid crystal phase is prepared, it is difficult to prevent the decrease of the transparency caused by the degradation of the material in the layer only by adjusting the illuminance of the UV light.

Under the above-described circumstances, the present invention was made, and an object of the invention is to prevent the decrease in transparency caused by an irradiation of an UV light in the process of preparing a light reflective film with plural light reflective layer formed of a fixed cholesteric liquid crystal phase. More specifically, an object of the invention is to provide a process of stably preparing a light reflective film with plural light reflective layers formed of a fixed cholesteric liquid crystal phase having a high transparency and excellent light reflective characteristics.

### MEANS OF SOLVING THE PROBLEMS

The means for achieving the first object are as follows.
[1] A process of preparing a light reflective film having at least two light reflective layers formed of a fixed cholesteric liquid crystal phase comprising
   a first step of allowing a curable liquid crystal composition to form a cholesteric liquid crystal phase on a first light reflective layer formed of a fixed cholesteric liquid crystal phase, and
   a second step of carrying out a curing reaction of the curable liquid crystal composition under an irradiation of an ultraviolet light to fix the cholesteric liquid-crystal phase, thereby to form a second light reflective layer, wherein
   in the second step, the ultraviolet light is irradiated to the curable liquid crystal composition through a member capable of lowering at least the intensity of the ultraviolet light with a wavelength of 340nm or shorter.
[2] A process of preparing a light reflective film having at least two light reflective layers formed of a fixed cholesteric liquid crystal phase comprising
   a first step of allowing a curable liquid crystal composition to form a cholesteric liquid crystal phase on a first light reflective layer formed of a fixed cholesteric liquid crystal phase, and
   a second step of carrying out a curing reaction of the curable liquid crystal composition under an irradiation of an ultraviolet light to fix the cholesteric liquid-crystal phase, thereby to form a second light reflective layer, wherein
   in the second step, an ultraviolet light without a wavelength of 340nm or shorter is irradiated to the curable liquid crystal composition.
[3] The process of [1] or [2], wherein in the second step, the ultraviolet light without a wavelength of 340nm or shorter, having an intensity-distribution at least in a part of the wavelength-range of longer than 340nm but not longer than 365nm, is irradiated to the curable liquid crystal composition.
[4] The process of any one of [1]-[3], wherein in the second step, the ultraviolet light is irradiated to the curable liquid crystal composition through a filter capable of cutting the ultraviolet light with a wavelength of 340nm or shorter.
[5] The process of [1] or [2], wherein in the second step, the ultraviolet light is irradiated to the curable liquid crystal composition through a filter capable of cutting the ultraviolet light with a wavelength of 365nm or shorter.
[6] The process of any one of [1]-[5], wherein the first light reflective layer is disposed on an ultraviolet absorbable substrate; and in the second step, the ultraviolet light is irradiated to the curable liquid crystal composition through the substrate.
[7] The process of [6], wherein the ultraviolet absorbable substrate is a substrate having at least an ultraviolet absorbable layer comprising an ultraviolet absorber, or is a substrate comprising an ultraviolet absorber.
[8] The process of [7], wherein the ultraviolet absorber is a benzotriazole series ultraviolet absorber.
[9] The process of any one of [1]-[8], wherein the thickness of the second light reflective layer is equal to or more than 3µm.
[10] The process of any one of [1]-[9], wherein the first and second light reflective layers comprise a chiral agent respectively having the helical rotation direction opposite to each other.
[11] The process of any one of [1]-[10], of preparing the light reflective film comprising, at least ,a substrate, and, on one surface thereof, the first and second light reflective layers which are capable of reflecting circularly-polarized lights opposite to each other.
[12] The process of any one of [1]-[10], of preparing the light reflective film comprising, at least, a substrate, and, on both surfaces thereof, the first and second light reflective layers which are capable of reflecting circularly-polarized lights opposite to each other.
[13] The process of any one of [1]-[12], of preparing the light reflective film having at least one peak (the local maximal value) of the reflection at a wavelength of 700nm or longer
[14] The process of any one of [1]-[13], of preparing the light reflective film having at least one peak (the local maximal value) of the reflection in a wavelength range of from 800 to 1300nm:
[15] The process of any one of [1]-[14], of preparing the light reflective film to be used for a windowpane of a building or vehicle.

### ADVANTAGE OF THE INVENTION

According to the invention, it is possible to prevent the decrease in transparency caused by an irradiation of an UV light in the process of preparing a light reflective film with plural light reflective layer formed of a fixed cholesteric liquid crystal phase. More specifically, it is possible to provide a process of stably preparing a light reflective film with plural light reflective layers formed of a fixed cholesteric liquid crystal phase having a high transparency and excellent light reflective characteristics.

### BRIEF DESCRIPTION OF THE DRAWING

[FIG. 1] is a cross-sectional view of one example of the light reflective film prepared according to the process of the first invention.
[FIG. 2] is a cross-sectional view of another example of the light reflective film prepared according to the process of the first invention.
[FIG. 3] is a cross-sectional view of another example of the light reflective film prepared according to the process of the first invention.
[FIG. 4] is an ultraviolet absorption curve of an ultraviolet absorber which can be used in the invention.

### MODE FOR CARRYING OUT THE INVENTION

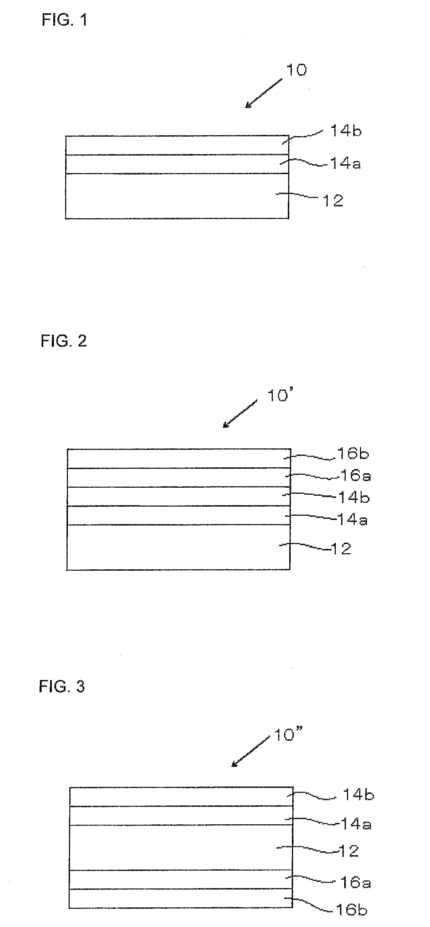

The invention is described in detail hereinunder. In this description, the numerical range expressed by the wording "a number to another number" means the range that falls between the former number indicating the lowermost limit of the range and the latter number indicating the uppermost limit thereof.
The present invention relates to a process of preparing a light reflective film having at least two light reflective layers formed of a fixed cholesteric liquid crystal phase. Examples of the light reflective film prepared according to the process of the invention are shown in FIGS. 1-3 respectively.
The light reflective film 10 shown in FIG. 1 has light-reflective layers 14a and 14b each formed of a fixed cholesteric liquid-crystal phase on one surface of the substrate 12; and the light reflective film 10' shown in FIG. 2 further has light-reflective layers 16a and 16b each formed of a fixed cholesteric liquid-crystal phase on the surface thereof. Although, as well as the light reflective film 10', the light reflective film 10" shown in FIG. 3 has four light reflective layers, the light reflective film 10" has two light reflective layers on both surfaces of the substrate respectively, or that is, the light reflective film 10" has light-reflective layers 14a and 14b each formed of a fixed cholesteric liquid-crystal phase on one surface of the substrate 12 and has light reflective layers 16a and 16b each formed of a fixed cholesteric liquid-crystal phase on another surface.

In the light reflective films 10, 10' and 10" shown in FiGs. 1-3, each of the light reflective layers is formed by fixing a cholesteric liquid crystal phase, and therefore, they exhibit selective light reflectivity of reflecting a light having a specific wavelength based on the helical pitch of the cholesteric liquid-crystal phase in each layer. For example, if the adjacent light reflective layers (14a and 14b or 16a and 16b) have the nearly equal helical-pitch and have the helical-rotation characteristics opposite to each other, the film with the layer can reflect both of the left- and right-circularly-polarized lights with a nearly equal wavelength, which is preferable. According to an example of the light reflective film 10 shown in FIG. 1, among the light reflective layers 14a and 14b, the light reflective layer 14a is formed of a liquid crystal composition containing a right helical-rotation chiral agent, the light reflective layer 14b is formed of a liquid crystal composition containing a left helical-rotation chiral agent, and the helical pitches, d₁₄nm, of the light reflective layers 14a and 14b are nearly equal to each other. According to an example of the light reflective film 10' or 10" shown in FIG. 2 or 3 respectively, the relation of the light reflective layers 14a and 14b is same as that found in the above-described example of the light reflective film 10, the light reflective layer 16a is formed of a liquid crystal composition containing a right helical-rotation chiral agent, the light reflective layer 16b is formed of a liquid crystal composition containing a left helical-rotation chiral agent, the helical pitches, d₁₆nm, of the light reflective layers 16a and 16b are nearly equal to each other, and d₁₄≠d₁₆ is satisfied. The light reflective films, satisfying the above-described conditions, have the effect similar to that of the above-described example of the light reflective film 10, and has also the broader light reflective characteristics since the light reflective layers 16a and 16b broaden the wavelength range of the light to be reflected.

One example of the light reflective film prepared according to the process of the present invention is a so-called infrared-light reflective film having at least one peak (the local maximal value) of the reflection at a wavelength of 700nm or longer. Preferably, the infrared-light reflective layer has at least one peak (the local maximal value) of the reflection in a wavelength range of from 800 to 1300nm. For example, as well as the light reflective film shown in FIG. 2 or 3, according to the embodiment having four or more light reflective layers, if the helical pitch of the right and the left helical rotation layers, the light reflective layers 14a and 14b, is opposite to that of the right and the left helical rotation layers, the light reflective layers 16a and 16b, the embodiment has, in a range of from 800 to 1300nm, a peak of the light reflected by the light reflective layers 14a and 14b and a peak of the light reflected by the light reflective layers 16a and 16b, or that is, the embodiment can be an infrared-light reflective film having two peaks of the reflected lights at the wavelengths (for example at 1000nm and 1at 1200nm) in the range. The selective light reflectivity for the light with a wavelength of 700nm or longer can be achieved by any cholesteric liquid crystal layer having a helical pitch of from about 500 to about 1350nm (preferably, about from 500 to 900nm, or more preferably from about 550 to about 800nm) and having a thickness of from about 1µm to about 8µm. By selecting and controlling the type and the concentration of the material (mainly liquid-crystal material and chiral agent) for use in forming the layers, the light-reflective layer having a desired helical pitch can be formed. The thickness of the layer may be controlled to fall within the desired range, by controlling the coating amount.

The present invention relates to a process for preparing a light reflective film having plural light reflective layers formed of a fixed cholesteric liquid crystal phase, as shown in FIGs. 1-3. The light reflective layer is prepared by fixing an orientation state of a curable liquid crystal composition via carrying out a curing reaction thereof, after the composition forms a cholesteric liquid crystal phase. Every time each of the layers is formed, the steps of coating, drying and irradiation of an ultraviolet light are repeated; and therefore, every time other light reflective layers (in FIGs. 1-3, such as the light reflective layer 14b) are formed, the layer formed initially (in FIGs. 1-3, such as the light reflective layer 14a) is subjected to an irradiation of an ultraviolet light. Such an excessive irradiation of an ultraviolet light may cause the degradation of the material (mainly the liquid crystal material) contained in the layer, which may result in increasing the haze of the layer and the light reflective film as a whole. According to the process of the present invention, even if the light reflective layer, formed initially, is subjected to an irradiation of an ultraviolet light repeatedly while other layers are formed, it is possible to maintain the high transparency without any excessive decrease of the transparency, and also to produce the light-reflective film exhibiting excellent light-reflective characteristics attributed to the lamination of plural light reflective layers.

Needless-to-say, the present invention is not limited to the embodiments of the light reflective films shown in FIGs. 1-3 or is not limited to the process described above, and the process of the invention may be used for preparing any light reflective films having two or more light reflective layers formed of a fixed cholesteric liquid crystal phase.

The process of the present invention will be described in details below.
The process for preparing a light reflective film of the invention comprising
a first step of allowing a curable liquid crystal composition to form a cholesteric liquid crystal phase on a first light reflective layer formed of a fixed cholesteric liquid crystal phase, and
a second step of carrying out a curing reaction of the curable liquid crystal composition under an irradiation of an ultraviolet light to fix the cholesteric liquid-crystal phase, thereby to form a second light reflective layer, wherein
in the second step, the ultraviolet light is irradiated to the curable liquid crystal composition through a member capable of lowering at least the intensity of the ultraviolet light with a wavelength of 340nm or shorter.

The example of preparing the embodiment of the light reflective film 10 shown in FIG. 1 according to the process of the invention will be described below.
At first, the light reflective layer 14a is formed on the surface of the substrate 12 formed of a glass plate, polymer film or the like. The light reflective layer 14a is may be formed as follows. A curable liquid crystal composition is applied to a surface of the substrate 12, dried to form a cholesteric liquid crystal phase, and then irradiated with an ultraviolet light to carry out the curing reaction and to fix the cholesteric liquid crystal phase. The curable liquid crystal composition contains a right or left helical-rotation chiral agent and/or a liquid crystal material having an asymmetric carbon atom for forming the cholesteric liquid crystal phase.
The light reflective layer 14a may be a layer formed by transferring the layer formed on a temporary support according to the process similar to the above-described process onto the substrate 12.

Next, a curable liquid crystal composition is applied to a surface of the light reflective layer 14a to form the light reflective layer 14b. As well as the composition for preparing the light reflective layer 14a, the curable liquid crystal composition contains a right or left helical-rotation chiral agent and/or a liquid crystal material having an asymmetric carbon atom for forming the cholesteric liquid crystal phase. It is especially preferred that the composition contains a chiral agent having the helical-rotation property opposite to that of the chiral agent used for forming the light reflective layer 14a; and more specifically, it is especially preferred that the composition contains a chiral agent having the left helical-rotation property according to the embodiment wherein the liquid crystal composition to be used for preparing the light reflective layer 14a contains a chiral agent having the right helical-rotation property, or that the composition contains a chiral agent having the right helical-rotation property according to the embodiment wherein the liquid crystal composition to be used for preparing the light reflective layer 14a contains a chiral agent having the left helical-rotation property. The curable liquid-crystal composition is preferably prepared as a coating liquid of the material dissolved and/or dispersed in a solvent. The coating liquid may be applied according to any method such as a wire bar coating method, an extrusion coating method, a direct gravure coating method, a reverse gravure coating method, a die coating method or the like. By using an inkjet apparatus, the liquid crystal composition may be jetted out through a nozzle to apply the composition to the surface of the light reflective layer 14a.

Next, a coated layer of the curable liquid crystal composition applied to the surface of the light reflective layer 14a is allowed to form a cholesteric liquid crystal phase. In the embodiment wherein the curable liquid crystal composition is prepared as a coating liquid containing any solvent, the cholesteric liquid crystal phase may sometimes be formed by drying the coated layer for removing the solvent therefrom. Or, if necessary, the coated layer may be heated for raising the temperature to the phase transition temperature at which the coated layer transfers to the cholesteric liquid crystal phase. For example, it is possible to obtain the cholesteric liquid crystal phase stably by heating the coated layer once to the temperature at which the coated layer transfers to the isotropic phase, and then cooling it to the temperature at which the phase transfers to the cholesteric liquid crystal phase In terms of the productivity or the like, the phase transfer temperature of the curable liquid crystal composition to be used for preparing the light reflective layer 14b is preferably from 10 to 250 degrees Celsius, or more preferably from 10 to 150 degrees Celsius. If the phase transfer temperature is less than 10 degrees Celsius, the step of cooling the composition to the temperature at which it forms a liquid crystal phase may be necessary. Or if the phase transfer temperature is higher than 200 degrees Celsius, the temperature higher than that at which the composition forms the liquid crystal phase is necessary for obtaining the isotropic phase, which is disadvantage in terms of waste of the thermal energy or transformation or transubstantiation of the substrate. The materials which can be used for preparing the curable liquid crystal composition will be described in details later.

Next, the coated layer forming the cholesteric liquid crystal layer is subjected to an irradiation of an ultraviolet light to carry out the curing reaction, and according to the invention, in this step, the coated layer is subjected to an irradiation of an ultraviolet light through any member capable of lowering the intensity of the ultraviolet light with a wavelength of 340nm or shorter. The light source used in the irradiation of the ultraviolet light may be a mercury lamp, metal halide lamp, high-power metal halide lamp or the like. The lamps usually emit the lights of which wavelength is from about 200nm to about 450nm. The main wavelength of the mercury lamp is 365nm, and the mercury lamp efficiently emits the lights with wavelengths of 254nm, 303nm and 313nm. Both of the metal halide lamp and the high-power metal halide lamp emit the ultraviolet spectrum covering a wide range of from 200nm to 450nm, and they have a feature that the output power of the long ultraviolet light from 300nm to 450nm is higher than that of the mercury lamp. According to the invention, the ultraviolet light, of which the intensity of the light from 340nm to 200nm is at least lowered, or preferably the ultraviolet light, from which the light from 340nm to 200nm is cut, is irradiated since the irradiation is carried out through the member capable of at least lowering the intensity of the ultraviolet light of 340nm or shorter. Generally, the shorter light has a higher energy; and therefore, the ultraviolet light of the short side, or that is, the ultraviolet light being shorter than 300nm, has been considered to cause the degradation or the like of the material. However, the present inventors have assiduously studied and, as a result, have found surprisingly that the light-reflective layer, subjected to an irradiation of the ultraviolet light repeatedly, became opacified even if the ultraviolet light, from which the 300nm or shorter ultraviolet light was cut at all or from which the 240nm or shorter ultraviolet light was cut at all, was used for the curing reaction. The present inventors have further assiduously studied and, as a result, have found that the irradiation of the relatively long ultraviolet light which was longer than 300nm and had been considered to affect the degradation of the material not so much, affected the degradation of the material much. On the basis of these findings, the present inventors have further assiduously studied and, as a result, have found that the opacification caused by the degradation of the material was remarkably affected by whether or not the ultraviolet light of about 340nm was irradiated. The present inventors have further assiduously studied and, as a result, have found that, by performing the irradiation through the member such as a filter and an ultraviolet absorbable layer capable of at least lowering the intensity of the ultraviolet light of 340nm or shorter or preferably cutting the ultraviolet light of 340nm or shorter, it was possible to prevent the degradation of the material (mainly liquid crystal material) contained in the layer even if the layer was subjected to an irradiation of the ultraviolet light repeatedly, and it was possible also to keep the transparency high and to stably and promptly form a light reflective layer, having sufficient strength and light reflective characteristics.

According to another embodiment of the invention, the step is carried out by irradiating the curable liquid crystal composition with the ultraviolet light without any lights of 340nm or shorter. The step may be carried out by using a light source having an irradiating distribution only in the wavelength range of longer than 340nm. Even if using any light source having the irradiating distribution in the wavelength range including 340nm or shorter, it is possible to irradiate the curable liquid crystal composition with the ultraviolet light without any lights of 340nm or shorter by carrying out the irradiation through the member such as a filter capable of cutting the light of 340nm or shorter.

In this step, under the irradiation of the ultraviolet light, the curing reaction of the liquid crystal composition is carried out, the cholesteric liquid crystal phase is fixed, and the light reflective layer 14b is formed. When the irradiation of the ultraviolet is carried out for preparing the light reflective layer 14b, a part of the ultraviolet is irradiated to the light reflective layer 14a. According to the present invention, the curing reaction of the light reflective layer 14b is carried out by subjecting the curing liquid crystal composition to the irradiation of the ultraviolet light having the lowered intensity of the ultraviolet of 340nm or shorter or of the ultraviolet light not including the light of 340nm or shorter, and therefore, as described above, the degradation of the material (mainly the liquid crystal material) contained in the light reflective layer 14a can be prevented. Furthermore, even if the intensity of the ultraviolet-light with a wavelength of not longer than 340nm is decreased, the polymerization of the liquid crystal composition containing any polymerizable ingredient having an ethylene polymerizable group or the like can be carried out promptly and stably, and the light reflective layer 14b, having light reflective characteristics and good strength, can be formed promptly and stably.

According to one example of this step, an ultraviolet-rays cut filter is used. As described above, usually, the wavelength range of the UV light emitted from an ultraviolet light source lamp is from about 200 to about 450nm. According to the invention, any ultraviolet rays cut filter can be used as far as the filter can cut the ultraviolet rays with a wavelength of 340nm or shorter. For example, an ultraviolet-rays cut filter capable cutting the ultraviolet rays with a wavelength of 340nm or shorter and an ultraviolet-rays cut filter capable of cutting the UV rays with a wavelength of 365nm or shorter may be used. As a commercially-available product, DUV cut filter (manufactured by USHIO INC., a cut filter for the wavelength of 340nm or shorter) is exemplified. Any commercially available product can be used as far as it has the above-described properties. Even if any cut filter capable of cutting the UV rays with a wavelength of not longer than 300nm or not longer than 240nm is used, it is not possible to prevent the opacification of the light reflective layer caused by the irradiation of the UV rays, and therefore, such UV-rays cut filters are not suitable in the present invention. On the other hand, if any filter capable of cutting the UV rays with a longer wavelength is used, the curing reaction may be delayed and the film-strength and the selective reflection characteristics may become insufficient. According to the present invention, the member, having no influence on the UV rays with a wavelength of longer than 365nm, such as an UV rays cut-filter, UV-absorbing layer or the like described later is preferably used, and the filter, which is capable of cutting the UV rays with a wavelength of not longer than 340nm, is most preferably used. In other words, according to the present invention, the UV light, including no light with a wavelength of not longer than 340nm, is irradiated in the step. In terms of the film-strength, it is more preferable that the UV light, including no light with a wavelength of not longer than 340nm and having the intensity distribution at least in a part of the wavelength range of longer than 340nm but not longer than 365nm, is used.

In the process of the present invention, the UV rays cut filter may be directly attached to the outputting aspect of an UV light source (for example a lamp), or may be attached to an accessory such as a louver or a cover.

In another example of the step, any substrate having the UV-absorbing property may be used in place of or along with the filter. More specifically, any UV-absorbing substrate is used as the substrate 12, and the coated layer formed of the curable liquid crystal composition is irradiated with the UV light through the UV-absorbing substrate, more specifically, from the rear-surface (the surface having not light reflective layer 14a thereon) of the substrate 12 in FIG. 1. Examples of the UV-absorbing substrate include glass plates and polymer films having an UV-absorbing layer, and substrates containing an UV absorber and having UV-absorbing properties themselves. The UV-absorbing substrate preferably absorbs the light with a wavelength of not longer than 340nm and lowers the intensity thereof, or more preferably cuts the UV light by absorbing it completely. For achieving the properties, it is preferable that the UV-absorbing layer attached to the substrate or the substrate itself contains the UV absorber.

The irradiation energy of the UV light is not limited, and generally, it is preferably from about 100mJ/cm² to about 800mJ/cm². The period of the irradiation of the UV light for the coated layer is not limited, and may be decided in terms of the strength of the cured layer and the productivity,

For promoting the curing reaction, the ultraviolet irradiation may be carried out under heat. The temperature in the ultraviolet irradiation is preferably kept within a temperature range within which the cholesteric liquid-crystal phase can be kept safely as such with no disturbance. The oxygen concentration in the atmosphere participates in the degree of polymerization of the cured film. Accordingly, in case where the cured film could not have the intended degree of polymerization in air and the film hardness is therefore insufficient, preferably, the oxygen concentration in the atmosphere is lowered according to a method of nitrogen purging or the like. The preferred oxygen concentration is at most 10%, more preferably at most 7%, most preferably at most 3%. The reaction rate of the curing reaction (for example, polymerization) carried out by the irradiation of the UV light is preferably not less than 70%, more preferably not less than 80% or even more preferably not less than 90% in terms of maintaining the mechanical strength of the layer or preventing the outflow of the un-reacted ingredients. For improving the reaction rate, the method of increasing the irradiation energy of the UV light or the method of carrying out the polymerization under a nitrogen gas atmosphere or under heat is effective. The method wherein the reaction is further conducted by the thermal polymerization after the polymerization is carried out once, or the method wherein the irradiation of the UV light is carried out again (the irradiation is carried out under the conditions satisfying the conditions of the present invention) may be used. The measurement of the reaction rate may be carried out by comparing between the absorbing intensities of the reactive group after and before the progression of the reaction in the IR-vibration spectrum.

One example of the light reflective film prepared according to the process of the invention is an infrared reflective film having the selective reflection characteristics attributed to at least one reflection peak at a wavelength of 700nm or longer (more preferably from 800 to 1300nm). As described above, the selective infrared reflection characteristics may be achieved by the layer having a helical pitch of from 500 to 1350nm (more preferably from 500 to 900nm, or even more preferably from 550 to 800nm) and having the thickness of from 1 to 8 micro meters (more preferably from 3 to 8 micro meters). Namely, according to the embodiment of the infrared reflective film, the layer having a certain level of the thickness may be required, and the irradiation of the UV light may tend to be excess. Therefore, the process of the invention is especially useful as a process of preparing an infrared reflective film requiring the light reflective layer having a certain level of the thickness (for example, 3 micro meters or more).

In the step, the cholesteric liquid crystal phase is fixed and the light reflective layer 14b is formed. A most typical and preferred embodiment of the "fixed" liquid-crystal state is such that the alignment of the liquid-crystal compound to form the cholesteric liquid-crystal phase is held as such, to which, however, the invention is not limited. Concretely, the fixed state means that, in a temperature range of generally from 0 to 50 degrees Celsius, or from -30 to 70 degrees Celsius under a severer condition, the layer does not have flowability and does not undergo any alignment morphology change in an external field or by an external force applied thereto, and the layer can continue to stably keep the fixed alignment morphology. In the invention, the alignment state of the cholesteric liquid-crystal phase is fixed through the curing reaction under an irradiation of the ultraviolet. Therefore, the liquid crystal composition to be used in the invention is curable. Examples of the curing reaction carrying out under the irradiation of the UV light include polymerization and cross-linking reaction. In one example, a polymerizable liquid crystal composition, containing a polymerization initiator and polymerizable ingredient (the polymerizable ingredient may be a liquid crystal composition, chiral agent or the like, or may be a polymerizable monomer added separately), is applied to a surface of the light reflective layer 14a, aligned under heat at a temperature of forming cholesteric liquid crystal phase, and subjected to an irradiation of the UV light to carry out the reaction and fix the alignment state, and in this way, the light reflective layer is formed.
In the invention, it is enough that the optical properties of the cholesteric liquid-crystal phase are held in the layer, and finally it is any more unnecessary that the liquid-crystal composition in the light-reflective layer exhibits liquid crystallinity. For example, the liquid-crystal composition may be converted to a high-molecular weight substance and may lose the liquid crystallinity.

In this way, the light reflective film 10 shown in FIG.1 with the light reflective layers 14a and 14b can be prepared. Furthermore, the light reflective film with four or more light reflective layers shown in FIG. 2 or 3 can be prepared by repeating the above-described steps.
In one example of the process of the invention for preparing the light reflective film 10' shown in FIG. 2, as well as the light reflective layer 14b, the light reflective layer 16a can be formed on the surface of the light reflective layer 14b by using a curable liquid crystal composition after the light reflective layers 14a and 14b are formed on the substrate 12; and furthermore, the light reflective layer 16b can be formed on the surface of the light reflective layer 16a by using a curable liquid crystal composition. According to the embodiment, the irradiation of the UV light for forming the light reflective layers 16a and 16b is carried out under the above-described condition, and therefore, the degradation of the materials in the layer can be prevented and the high transparency can be kept though the light reflective layers 14a and 14b are repeatedly subjected to the irradiation of the UV light.

In one example of the process of the invention for preparing the light reflective film 10" shown in FIG. 3, as well as the light reflective layer 14b, the light reflective layer 16a can be formed on the rear-surface of the light reflective layer 14b by using a curable liquid crystal composition after the light reflective layers 14a and 14b are formed on the substrate 12; and furthermore, the light reflective layer 16b can be formed on the surface of the light reflective layer 16a by using a curable liquid crystal composition. According to the embodiment, the irradiation of the UV light for forming the light reflective layers 16a and 16b is carried out under the above-described condition, and therefore, the degradation of the materials in the layer can be prevented and the high transparency can be kept though the light reflective layers 14a and 14b are repeatedly subjected to the irradiation of the UV light. It is possible to further prevent the light reflective layers 14a and 14b from degradation caused by the UV light by carrying out the irradiation of the UV light through the filter having the above-described property from the rear-surface side of the UV-absorbing substrate used as the substrate 12 during forming the light reflective layers 16a and 16b. Of course, it is possible to prepare the light reflective film having the high transparency by using the filter having the above-described property even if any substrate having no UV-absorbing property is used as the substrate 12, or by using the UV-absorbing substrate even if the filter is not used.

In another example of the process of the invention for preparing the light reflective film 10" shown in FIG. 3, at first, the light reflective layers 14a and 16a may be formed on the surface and the rear-surface of the substrate sequentially or simultaneously, and after that, the light reflective layers 14b and 16b may be formed on the surface of the light reflective layers 14a and 16a sequentially or simultaneously.

Next, various materials which can be used for preparing the light reflective film of the invention will be described in details.

### 1. Materials for Light-Reflective Layers

According to the invention, for preparing each of the light-reflective layers, a curable liquid crystal composition is preferably used. One example of the liquid crystal composition contains at least a rod-like liquid crystal, an optically-active compound (chiral agent) and a polymerization initiator. Two or more types of each of the ingredients may be used. For example, polymerizable and non-polymerizable liquid-crystal compounds may be used in combination. Or, low-molecular weight or high-molecular weight liquid-crystal compounds may be used in combination. Furthermore, each of the light-reflective layers may contain at least one additive selected from any additives such as homogenous-alignment promoter, anti-unevenness agent, anti-repelling agent and polymerizable monomer for improving the uniformity of alignment, the coating property or the film strength.
If necessary, the liquid crystal composition may contain any polymerization inhibitor, antioxidant, ultraviolet absorber, light-stabilization agent or the like in an amount unless the optical properties thereof are lowered.

### (1) Rod-like Liquid Crystal Compound

Examples of the rod-like liquid crystal compound which can be used in the invention include nematic rod-like liquid crystal compounds. Preferable examples of the nematic rod-like liquid crystal include azomethines, azoxys, cyanobiphenyls, cyanophenyl esters, benzoic acid esters, cyclohexanecarboxylic acid phenyl esters, cyanophenylcyclohexanes, cyano-substituted phenylpyrimidines, alkoxy-substituted phenylpyrimidines, phenyl dioxanes, tolans and alkenylcyclohexyl benzonitriles. In the invention, the liquid crystal compound can be selected from not only low-molecular weight compounds but also high-molecular weight compounds.

The rod-like liquid crystal compound to be used in the invention may be polymerizable or not polymerizable. Examples of the rod-like liquid crystal having no polymerizable group are described in many documents such as Y. Goto et.al., MoLCryst. Liq. Cryst. 1995, Vol. 260, pp.23-28.
A polymerizable rod-like liquid crystal compound may be prepared by introducing a polymerizable group in rod-liquid crystal compound. Examples of the polymerizable group include an unsaturated polymerizable group, epoxy group, and aziridinyl group; and an unsaturated polymerizable group is preferable; and an ethylene unsaturated polymerizable group is especially preferable. The polymerizable group may be introduced in a rod-like liquid crystal compound according to any method. The number of the polymerizable group in the polymerizable rod-like liquid crystal compound is preferably from 1 to 6 and more preferably from 1 to 3. Examples of the polymerizable rod-like liquid crystal compound include those described in Makromol.Chem., vol. 190, p.2255 (1989), Advanced Materials, vol. 5, p.107 (1993), US Patent No. 4683327, US Patent No. 5622648, US Patent No. 5770107, WO95/22586, WO95/24455, WO97/00600, WO98/23580, WO98/52905, JPA No. 1-272551, JPA No. 6-16616, JPA No. 7-110469, JPA No. 11-80081 and JPA No. 2001-328973. Plural types of polymerizable rod-like liquid crystal compounds may be used in combination. Using plural types of polymerizable rod-like liquid crystal compounds may contribute to lowering the alignment temperature.

### (2) Optically-Active Compound (Chiral Agent)

The liquid crystal composition is capable of forming a cholesteric liquid crystal phase, and preferably contains a optically-active compound. However, if the rod-like liquid crystal compound having a chiral carbon in its molecule is used, some of the compositions containing such a rod-like liquid crystal compound may be capable of stably forming a cholesteric liquid crystal phase even if they don't contain any optically-active compound. The optically-active compound may be selected from any known chiral agents such as those used in twisted-nematic (TN) and super-twisted-nematic (STN) modes, which are described, for example, in "Ekisho Debaisu Handobukku (Liquid Crystal Device Handbook)" , Third Chapter, 4-3 Chapter, p.199, edited by No. 142 Committee of Japan Society for the Promotion of Science, published by the Nikkan Kogyo Shimbun, Ltd., in 1989. Although, generally, an optically-active compound has a chiral carbon in its molecule, axially chiral compounds and planar chiral compound, having no chiral carbon, may be used as a chiral compound in the invention. Examples of the axially chiral compound or the planar chiral compound include binaphthyl, helicene, paracyclophane and derivatives thereof. The optically-active compound (chiral compound) may have at least one polymerizable group. Using a polymerizable optically-active compound along with a polymerizable rod-like compound, it is possible to obtain a polymer having repeating units derived from the optically-active compound and the rod-like liquid crystal compound respectively by carrying out the polymerization thereof. In such an embodiment, the polymerizable group in the optically-active compound is preferably same as that in the rod-like liquid crystal compound. Accordingly, the polymerizable group in the optically-active compound is preferably selected from an unsaturated polymerizable group, epoxy group and aziridinyl group; and an unsaturated polymerizable group is preferable; and an ethylene unsaturated polymerizable group is especially preferable.
The optically-active compound may be selected from liquid crystal compounds.

An amount of the optically-active compound is preferably from 1 to 30 % by mole with respect to an amount of the rod-like liquid crystal compound used along with it. A smaller amount of the optically-active compound is more preferable since influence thereof on liquid crystallinity may be small. Accordingly, optically-active compounds having a strong helical twisting power are preferable since they may achieve the desired helical pitch by being added in a small amount. Examples of such an optically-active compound having a strong helical twisting power include those described in JPA 2003-287623.

### (3) Polymerization Initiator

The liquid crystal composition to be used for preparing each of the light-reflective layers is preferably a polymerizable liquid crystal composition; and on its own, the composition preferably contains at least one polymerization initiator. According to the invention, the polymerization may be carried out under an irradiation of an ultraviolet light, and the polymerization initiator is preferably selected from photo-polymerization initiators capable of initiating polymerizations by irradiation of an ultraviolet light. Examples of the photo-polymerization initiator include a-carbonyl compounds (those described in U.S. Patent Nos. 2367661 and 2367670), acyloin ethers (those described in U.S. Patent No. 2448828), α-hydrocarbon-substituted aromatic acyloin compounds (those described in U.S. Patent No. 2722512), polynuclear quinone compounds (those described in U.S. Patent Nos. 3046127 and 2951758), combinations of triarylimidazole dimer and *p*-aminophenyl ketone (those described in U.S. Patent No. 3549367), acrydine and phenazine compounds (those described in Japanese Laid-Open Patent Publication "Tokkai" No. S60-105667 and U.S. Patent No. 4239850), and oxadiazole compounds (those described in U.S. Patent No. 4212970).

An amount of the photo-polymerization initiator is preferably from 0.1 to 20 % by mass, more preferably from 1 to 8 % by mass, with respect to the liquid crystal composition (the solid content when the composition is a coating liquid).

### (4) Alignment Controlling Agent

Any alignment controlling agent, which can contribute to stably or promptly forming a cholesteric liquid crystal phase, may be added to the liquid crystal composition. Examples of the alignment controlling agent include fluorine-containing (meth)acrylate series polymers and compounds represented by formula (X1)-(X3). Two or more types selected from these compounds may be used in combination. These compounds may contribute to aligning liquid crystal molecules with a small tilt angle or horizontally at the air-interface alignment. It is to be understood that the term "horizontal alignment" in the specification means that the direction of long axis of a liquid crystalline molecule is parallel to the layer plane, wherein strict parallelness is not always necessary; and means, in this *specification,* that a tilt angle of the mean direction of long axes of liquid crystalline molecules with respect to the horizontal plane is smaller than 20°. The layer in which liquid crystal molecules are horizontally aligned at the air-interface may hardly suffer from alignment defects, and may have a high transparency for a visible light and have a high reflection rate. On the other hand, the layer in which liquid crystal molecules are aligned with a large tilt angle may suffer from the finger-print pattern, and may have a low reflective rate, high haze and diffraction characteristics, because of the misalignment between the helical axis of the cholesteric liquid crystal phase and the normal line of the layer surface.
Examples of the fluorine-containing (meth)acrylate series polymer, which can be used as an alignment controlling agent, include those described in JPA 2007-272185, [0018]-[0043].

The compounds represented by formula (X1)-(X3), which can be used as an alignment controlling agent, will be describe in detail respectively.

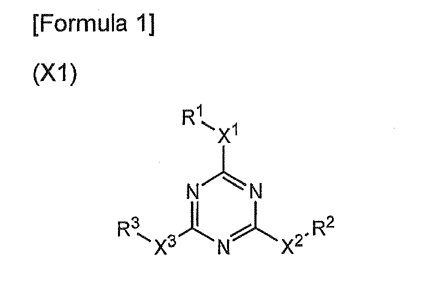

In the formula, R¹, R² and R³ each independently represent a hydrogen atom or a substituent group; X¹, X² and X³ each independently represent a single bond or divalent linking group. The substituent group represented by R¹-R³ respectively is preferably a substituted or non-substituted alkyl group (more preferably a non-substituted alkyl or a fluorinated alkyl group), an aryl group (more preferably an aryl group having at least one fluorinated alkyl group), a substituted or non-substituted amino group, an alkoxy group, an alkylthio group, or a halogen atom. The divalent linking group represented by X¹, X² and X³ respectively is preferably selected from the group consisting of an alkylene group, an alkenylene group, a divalent aryl group, a divalent heterocyclic group, -CO-, -NR^{a}- (where R^{a} represents a C₁₋₅ alkyl group or a hydrogen atom), -O-, -S-, -SO-, -SO₂- and any combinations thereof. The divalent linking group is preferably selected from the group consisting of an alkylene group, a phenylene group, -CO-, -NR^{a}-, -O-, -S-, -SO₂- and any combinations thereof. The number of carbon atom(s) in the alkylene group is preferably from 1 to 12. The number of carbon atoms in the alkenylene group is preferably from 2 to 12. The number of carbon atoms in the aryl group is preferably from 6 to 10.

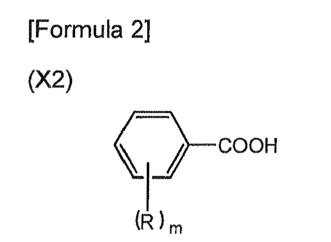

In the formula, R represents a substituent group; and m is an integer of from 0 to 5. When m is equal to or more than 2, two or more R are same or different from each other. Preferable examples of the substituent group represented by R are same as those exemplified above as an example of R¹, R² or R³ in formula (X1). In the formula, m is preferably from 1 to 3, and is especially preferably 2 or 3.

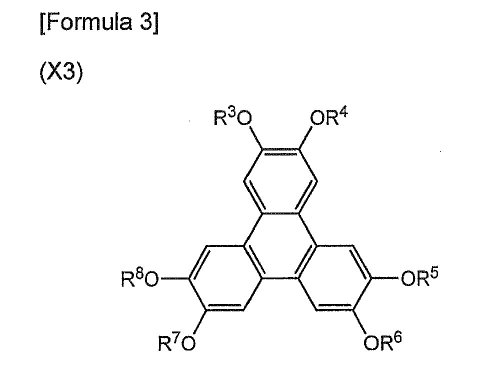

In the formula, R⁴, R⁵, R⁶, R⁷, R⁸ and R⁹ each independently represent a hydrogen atom or a substituent group. Preferable examples of R⁴, R⁵, R⁶, R⁷, R⁸ or R⁹ include those exemplified above as an example of R¹, R² or R³ in formula (X1).

Examples of the compound represented by formula (X1), (X2) or (X3), which can be used as an alignment controlling agent, include the compounds described in JPA 2005-99248.
One compound of formula (X1), (X2) or (X3) may be used alone, or two or more compounds of formula (X1), (X2) or (X3) may be used in combination.

An amount of the compound represented by formula (X1), (X2) or (X3) to be added to the liquid crystal composition is preferably from 0.01 to 10 % by mass, more preferably from 0.01 to 5 % by mass, or especially preferably from 0.02 to 1 by mass, with respect to an amount of the liquid crystal compound.

### 2. Substrate

The light reflective film of the present invention may be formed on a substrate. As the substrate, a glass plate or a polymer film may be used. The polymer film to be used as the substrate is not limited. According to some kind of the applications, the polymer films having high transparency for the visible light are preferably used. Polymer films having a high transmission for a visible light include those used in display devices such as a liquid crystal display device as an optical film. Preferable examples of the polymer film which can be used as a substrate include poly ester films such as polyethylene terephthalate (PET), polybutylene and polyethylene naphthalate (PEN) films; polycarbonate (PC) films; polymethylmethacrylate films; polyolefin films such as polyethylene and polypropylene films; polyimide films, triacetyl cellulose (TAC) films.

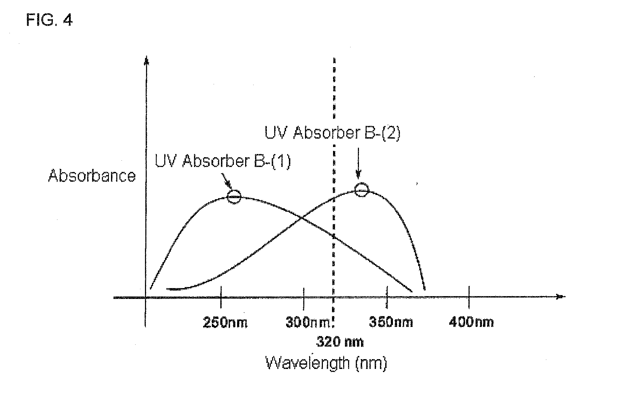

As described above, according to the process of the invention, any UV absorbable substrate may be used as the substrate, and the UV light may be irradiated through the substrate. The UV-absorbing substrate used in this embodiment preferably has the high absorbability for the UV light with a wavelength of not longer than 340nm. For achieving the property, the polymer film to be used as the substrate preferably contains the UV absorber having the absorbability for the wavelength range. Or the substrate having the UV-absorbing layer containing the UV absorber thereon may be used. The means for giving the UV-absorbability are not limited, and may be selected depending on the purpose. More specifically, the method of adding the UV absorber to the polymer film such as a PET sheet to be used as the substrate, or the method of adding the UV absorber to the undercoat layer or the transparent resin layer, disposed on the substrate, is exemplified. Example of the UV absorber include benzotriazole series, benzodithiol series, coumalin series, benzophenone series, salicylate ester series and cyano acrylate series UV absorbers, titanium oxide and zinc oxide. The species and amount of the UV absorber are not limited, and may be selected depending on the purpose. Preferable examples of the UV absorber include the compounds shown below and the analogs thereof. The absorption-peak wavelength of the compounds is equal to or shorter than 340nm. The UV-absorption curves of the compounds are shown in FIG. 4.

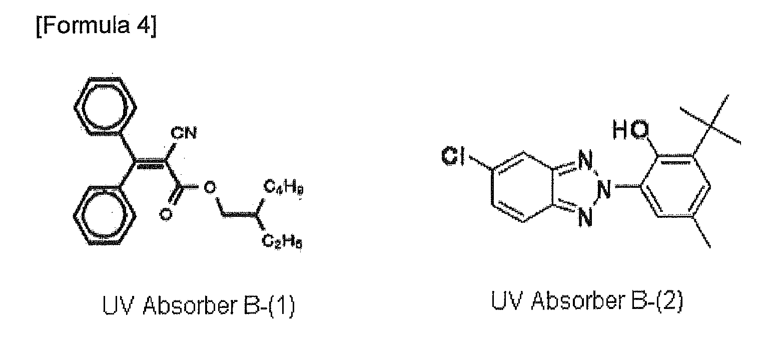

One example of the light reflective film prepared according to the process of the invention is an infrared reflective film having the selective reflection characteristics attributed to the reflection peak at the wavelength of not shorter than 700nm (more preferably from 800 to 1300nm). The infrared reflective film may be stuck on the windows of building structures such as houses, office buildings, etc., or to the windows of vehicles such as automobiles, etc., as a sunfight-shielding member. In addition, the light reflective plate having the light reflective film of the invention on the substrate such as a glass plate and a polymer film may be used directly as a sunlight-shielding member by itself (for example, as heat-shielding glass, heat-shielding film).

### EXAMPLES

Paragraphs below will further specifically describe features of the present invention, referring to Examples and Comparative Examples. Any materials, amount of use, ratio, details of processing, procedures of processing and so forth shown in Examples may appropriately be modified without departing from the spirit of the present invention. Therefore, it is to be understood that the scope of the present invention should not be interpreted in a limited manner based on the specific examples shown below.

### 1. Preparation of Substrate

A PET film manufactured by FUJIFILM was prepared as Substrate 1.
UV absorbable Substrate 2 to be used in Example 8 described later was prepared as follows.
A coating liquid for an UV absorbable layer having a following formulation was prepared.
Formulation of UV absorbable layer:

| | |
|---|---|
| ·methylethyl ketone | 40 parts by mass |
| ·methoxypropyl acetate | 10 parts by mass |
| ·acrylic resin (DIANAL BR-106 manufactured by Mitsubishi Rayon Co., Ltd.) | 10 parts by mass |
| ·benzotriazole series ultraviolet absorber represented by the following formula | |
| (Tinuvin326, Ciba-Japan) | 2.5 parts by mass |

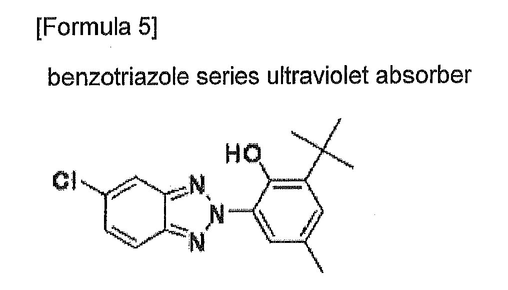

The coating liquid was applied to a PET film manufactured by FUJIFILM using a wire bar, and dried at 120 degrees Celsius for 7 minutes to form an UV absorbable layer having a thickness of 30 micro meters. In this way, UV absorbable Substrate 2 was prepared.
The UV absorbable layer of UV absorbable Substrate 2 lowered the transmittance of the light with a wavelength of 365nm or shorter to 0.1 % or less.

UV absorbable Substrate 3 to be used in Example 9 described later was prepared as follows.
Polyethylene resin was mixed with 1 % by mass of the above-described triazole series UV absorber, melt-mixed at 260 degrees Celsius, and extruded by using a melt-extruder to form a PET film. This was used as UV absorbable Substrate 3.
UV absorbable Substrate 3 lowered the transmittance of the light with a wavelength of 365nm or shorter to 0.1 % or less.

### 2. preparation of Light Reflective Layer

Coating Liquids (A), (B), (C) and (D) having the following formulation shown in the table were prepared respectively.

**[Table 1]**

| Formulation of Coating Liquid (A) | | |
|---|---|---|
| Materials (types) | Name (producer) | Amount |
| Rod-like liquid crystal compound | RM-257 (Merck) | 10.000 parts by mass |
| Chiral agent | LC-756 (BASF) | 0.293 parts by mass |
| Polymerization initiator | Irg-819 (Ciba Specialty Chemicals) | 0.419 parts by mass |
| Alignment controlling agent | Compound 1 shown below | 0.016 parts by mass |
| Solvent | 2-butanone (Wako) | 15.652 parts by mass |

**[Table 2]**

| Formulation of Coating Liquid (B) | | |
|---|---|---|
| Materials (types) | Name (producer) | Amount |
| Rod-like liquid crystal compound | RM-257 (Merck) | 10.000 parts by mass |
| Chiral agent | Compound 2 shown below | 0.183 parts by mass |
| Polymerization initiator | Irg-819 (Ciba Specialty Chemicals) | 0.419 parts by mass |
| Alignment controlling agent | Compound 1 shown below | 0.016 parts by mass |
| Solvent | 2-butanone (Wako) | 15.652 parts by mass |

**[Table 3]**

| Formulation of Coating Liquid (C) | | |
|---|---|---|
| Materials (types) | Name (producer) | Amount |
| Rod-like liquid crystal compound | RM-257 (Merck) | 10.000 parts by mass |
| Chiral agent | LC-756 (BASF) | 0.214 parts by mass |
| Polymerization initiator | Irg-819 (Ciba Specialty Chemicals) | 0.419 parts by mass |
| Alignment controlling agent | Compound 1 shown below | 0.016 parts by mass |
| Solvent | 2-butanone (Wako) | 15.652 parts by mass |

**[Table 4]**

| Formulation of Coating Liquid (D) | | |
|---|---|---|
| Materials (types) | Name (producer) | Amount |
| Rod-like liquid crystal compound | RM-257 (Merck) | 10.000 parts by mass |
| Chiral agent | Compound 2 shown below | 0.053 parts by mass |
| Polymerization initiator | Irg-819 (Ciba Specialty Chemicals) | 0.419 parts by mass |
| Alignment controlling agent | Compound 1 shown below | 0.016 parts by mass |
| Solvent | 2-butanone(Wako) | 15.652 parts by mass |

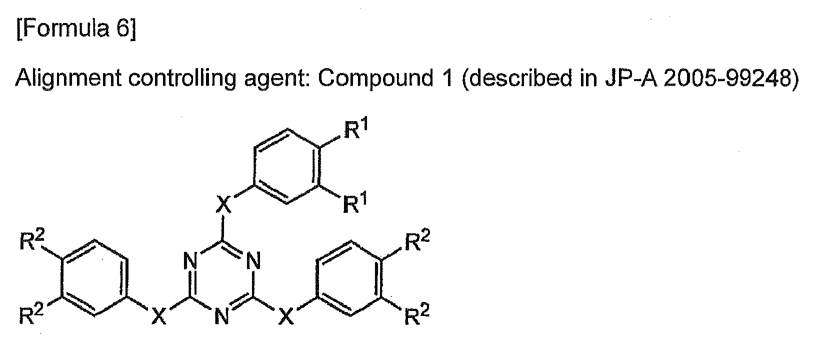

| R¹ | R² | X |
|---|---|---|
| O(CH₂)₂O(CH₂)(CF₂)₆F | O(CH₂)₂O(CH₂)₂(CF₂)₆F | NH |

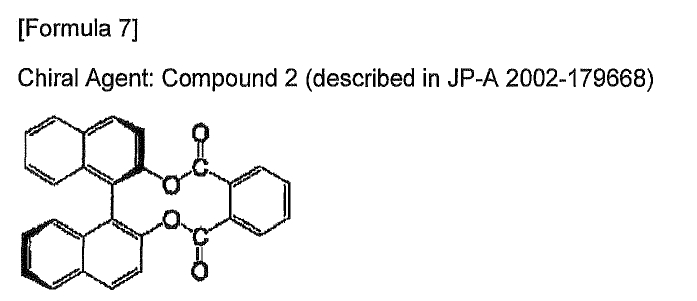

(1) Using a wire bar, each coating liquid was applied onto the PET film manufactured by FUJIFILM (Substrate 1) so as to have a dry thickness of 6 micro meters, at room temperature.
(2) This was dried at room temperature for 30 seconds to remove the solvent, and then heated in an atmosphere at 125 degrees Celsius for 2 minutes and thereafter at 95 degrees Celsius to form a cholesteric liquid-crystal phase. Next, using Fusion UV Systems' electrodeless lamp "D Bulb" (90 mW/cm), this was UV-irradiated at a power of 60% for 6 to 12 seconds, whereby the cholesteric liquid-crystal phase was fixed to form a film (light-reflective layer). Whether or not the irradiation was carried out with any filter is shown in the following table, and the kind of the filter is also shown in the table.
(3) If the sample having plural layers was prepared, the above steps (1) and (2) were repeated after this was cooled to room temperature.

In Example 8, each coating liquid was applied to a surface of an UV-absorbing layer of UV-absorbing Substrate 2 in the step(1), and then other steps were carried out in the same manner as the above to prepare the light reflective plate. Any filter was not used during the irradiation of the UV light, and the UV-absorbing layer formed on the PET film was used as a filter.
In Example 9, each coating liquid was applied to a surface of an UV-absorbing layer of UV-absorbing Substrate 3 in the step(1), and then other steps were carried out in the same manner as the above to prepare the light reflective plate. Any filter was not used during the irradiation of the UV light, and the UV-absorbing substrate itself was used as a filter.
According to the above-described process, each of the light reflective films shown in the following table was prepared.

### 3. Evaluation

The reflection-maximum wavelength of each of the light reflective films was measured, and the transmittance for the visible range of each of the light reflective films was measured using a spectrometer, and then they were evaluated. And the haze of each of the light reflective films was measured, and then evaluated. The results are shown in the following table.

**[Table 5]**

| | Number of layers (and construction) | Layer Construction | Time of UV irradiation | Filter | Reflection maximum wavelength | Transmittance | Haze |
|---|---|---|---|---|---|---|---|
| Example 1 | Two layers (FIG.1) | Coating Liquid (A)+(B) | 6 sec./each layer | Cut the light of 340nm or shorter | a reflection peak at 1000nm | ○ 97% | ○ 0.3% |
| Example 2 | Two layers (FIG.1) | Coating Liquid (A)+(B) | 12 sec./each layer | Cut the light of 340nm or shorter | a reflection peak at 1000nm | ○ 96% | ○ 0.3% |
| Example 3 | Two layers (FIG.1) | Coating Liquid (A)+(B) | 6 sec./each layer | Cut the light of 365nm or shorter | a reflection peak at 1000nm | ○ 97% | ○ 0.3% |
| Example 4 | Four layers (FIG. 2) | Coating Liquid (A)+(B) (C)+(D) | 6 sec./each layer | Cut the light of 340nm or shorter | refection peaks at 1000nm and 1200nm | ○ 96% | ○ 0.4% |
| Example 5 | (FIG. 1) | Coating Liquid (A)+(B) | 6 sec./each layer | Cut the light of 340nm or shorter | The UV absorber was applied to the rear-surface of the PET film and the UV was irradiated to the rear surface. a reflection peak at 1000nm | ○ 97% | ○ 0.4% |
| Example | Four layers (FIG. 3) | Coating Liquid (A)+(B), (C)+(D) | 6 sec./each layer | Cut the light of 340nm or shorter | reflection peaks at 1000nm and 1200nm | ○ 96% | ○ 0.4% |
| Comparative Example 1 | Two layers (FIG.1) | Coating Liquid (A)+(B) | 6 sec./each layer | No filter | a reflection peak at 1000nm | Δ 88% | × 10.1% |
| Comparative Example 2 | Four layers (FIG. 2) | Coating Liquid (A)+(B), (C)+(D) | 6 sec./each layer | No filter | reflection peaks at 1000nm and 1200nm | × 80% | × 20.0% |
| Comparative Example 3 | Two layers (FIG.1) | Coating Liquid (A)+(B) | 6 sec./each layer | Cut the light of 300nm or shorter | a reflection peak at 1000nm | Δ 90% | × 5.1% |
| Comparative Example 4 | Two layers (FIG.1) | Coating Liquid (A)+(B) | 6 sec./each layer | Cut the light of 240nm or shorter | a reflection peak at 1000nm | Δ 86% | × 7.2% |
| Comparative Example 5 | One layer^{*1} | Coating Liquid (A) | 6 sec./each layer | No filter | a reflection peak at 1000nm | ○ 90% | ○ 0.2% |
| Comparative Example 6 | Two layers^{*1} (FIG.1) | Coating Liquid (A)+(B) | 6sec./each layer | No filter | a reflection peak at 1000nm | Δ 88% | × 3.2% |
| Example 7 | Two layers^{*1} (FIG.1) | Coating Liquid (A)+(B) | 6 sec./each layer | Cut the light of 340nm or shorter | a reflection peak at 1000nm | ○ 97% | ○ 0.2% |
| Example 8 | Two layers^{*1} (FIG.1) | Coating Liquid (A)+(B) | 6 sec./each layer^{*2} | No filter | a reflection peak at 1000nm | ○ 93% | ○ 0.2% |
| Example 9 | Two layers^{*1} (FIG.1) | Coating Liquid (A)+(B) | 6 sec./each layer^{*2} | No filter | a reflection peak at 1000 nm | ○ 93% | ○ 0.2% |

| | | | | | | | |
|---|---|---|---|---|---|---|---|
| ^{*}1 the thickness of each layer was 3 µm. ^{*}2 the UV was irradiated from the substrate side. | | | | | | | |

### 4. Evaluation of Film-Strength

Regarding Examples 1 and 3, the film strength was measured according to the method of JIS G 0202, and evaluated. It was found that the film strength of Example 1 was 2H, which was good, and the film strength of Example 3 was H, which was inferior to Example 1. Regarding Example 3, the irradiation time was changed from 6 seconds to 12 seconds, and it was found that the film strength thereof was improved as well as Example 1.
Form the results, it is understandable that, according to the invention, it is possible to not only achieve the reduction of the opacification but also prepare the light reflective film, having the sufficient film-strength, even if the irradiation time is short by using a filter capable of cutting the UV light with a wavelength of 340nm or shorter and by using the UV light having no light of 340nm or shorter and the intensity distribution at least in a part of the range of longer than 340nm but not longer than 365nm.

### DESCRIPTION OF REFERENCE NUMERALS

- 10, 10', 10": Light reflective film
- 12: Substrate
- 14a, 14b, 16a,16b: Light reflective layer

## Claims

1. A process of preparing a light reflective film having at least two light reflective layers formed of a fixed cholesteric liquid crystal phase comprising
a first step of allowing a curable liquid crystal composition to form a cholesteric liquid crystal phase on a first light reflective layer formed of a fixed cholesteric liquid crystal phase, and
a second step of carrying out a curing reaction of the curable liquid crystal composition under an irradiation of an ultraviolet light to fix the cholesteric liquid-crystal phase, thereby to form a second light reflective layer, wherein
in the second step, the ultraviolet light is irradiated to the curable liquid crystal composition through a member capable of lowering at least the intensity of the ultraviolet light with a wavelength of 340nm or shorter.

2. A process of preparing a light reflective film having at least two light reflective layers formed of a fixed cholesteric liquid crystal phase comprising
a first step of allowing a curable liquid crystal composition to form a cholesteric liquid crystal phase on a first light reflective layer formed of a fixed cholesteric liquid crystal phase, and
a second step of carrying out a curing reaction of the curable liquid crystal composition under an irradiation of an ultraviolet light to fix the cholesteric liquid-crystal phase, thereby to form a second light reflective layer, wherein
in the second step, an ultraviolet light without a wavelength of 340nm or shorter is irradiated to the curable liquid crystal composition.

3. The process of claim 1 or 2, wherein in the second step, the ultraviolet light without a wavelength of 340nm or shorter, having an intensity-distribution at least in a part of the wavelength-range of longer than 340nm but not longer than 365nm, is irradiated to the curable liquid crystal composition.

4. The process of any one of claims 1-3, wherein in the second step, the ultraviolet light is irradiated to the curable liquid crystal composition through a filter capable of cutting the ultraviolet light with a wavelength of 340nm or shorter.

5. The process of claim 1 or 2, wherein in the second step, the ultraviolet light is irradiated to the curable liquid crystal composition through a filter capable of cutting the ultraviolet light with a wavelength of 365nm or shorter.

6. The process of any one of claims 1-5, wherein the first light reflective layer is disposed on an ultraviolet absorbable substrate; and in the second step, the ultraviolet light is irradiated to the curable liquid crystal composition through the substrate.

7. The process of claim 6, wherein the ultraviolet absorbable substrate is a substrate having at least an ultraviolet absorbable layer comprising an ultraviolet absorber, or is a substrate comprising an ultraviolet absorber.

8. The process of claim 7, wherein the ultraviolet absorber is a benzotriazole series ultraviolet absorber.

9. The process of any one of claims 1-8, wherein the thickness of the second light reflective layer is equal to or more than 3µm.

10. The process of any one of claims 1-9, wherein the first and second light reflective layers comprise a chiral agent respectively having the helical rotation direction opposite to each other.

11. The process of any one of claims 1-10, of preparing the light reflective film comprising, at least ,a substrate, and, on one surface thereof, the first and second light reflective layers which are capable of reflecting circularly-polarized lights opposite to each other.

12. The process of any one of claims 1-10, of preparing the light reflective film comprising, at least, a substrate, and, on both surfaces thereof, the first and second light reflective layers which are capable of reflecting circularly-polarized lights opposite to each other.

13. The process of any one of claims 1-12, of preparing the light reflective film having at least one peak (the local maximal value) of the reflection at a wavelength of 700nm or longer

14. The process of any one of claims 1-13, of preparing the light reflective film having at least one peak (the local maximal value) of the reflection in a wavelength range of from 800 to 1300nm.

15. The process of any one of claims 1-14, of preparing the light reflective film to be used for a windowpane of a building or vehicle.
